# EUROPEAN PATENT APPLICATION

(11) **EP 0 798 796 A2**
(43) Date of publication of application: **01.10.1997**
(21) Application number: 97302097.7
(22) Date of filing: 26.03.1997
(51) Int. Cl.: H01M 4/38, H01M 4/24, C22C 1/00

(54) **Rare earth element-containing hydrogen storage alloy, method of producing the same, negative electrode using said alloy, and alkaline rechargeable battery using said electrod**

(30) Priority: 28.03.1996 JP 104115/96; 25.03.1997 JP 91430/97
(71) Applicant: SHIN-ETSU CHEMICAL CO., LTD., Chiyoda-ku Tokyo (JP)
(72) Inventor: Shima, Satoshi, Shin-Etsu Chemical Co., Ltd., Takefu-shi, Fukui-ken, 915 (JP); Sugahara, Hiroto, Shin-Etsu Chemical Co., Ltd., Takefu-shi, Fukui-ken, 915 (JP); Madono, Junji, Shin-Etsu Chemical Co., Ltd., Takefu-shi, Fukui-ken, 915 (JP); Yamaguchi, Hidenao, Shin-Etsu Chemical Co., Ltd., Takefu-shi, Fukui-ken, 915 (JP)
(74) Representative: Bubb, Antony John Allen

(57) **Abstract**

Provided is a rare earth element-containing hydrogen storage alloy which fulfills at least one requirement selected from the requirements that (1) the total content of nonmetal elements present as impurities in the alloy matrix is not higher than 1,200 ppm by weight, (2) the total content of alkaline earth metal elements present as impurities in the alloy matrix is not higher than 100 ppm by weight, (3) the content of Mg present as an impurity in the alloy matrix is not higher than 80 ppm by weight, (4) the content of Cl present as an impurity in the alloy matrix is not higher than 10 ppm by weight, (5) the content of Pb present as an impurity in the alloy matrix is not higher than 100 ppm by weight, (6) the alloy has, in a surface layer covering from the alloy surface to a depth of 20 nm, an oxygen concentration that decreases sharply in the depth direction and is not higher than 10 weight % on the average in the surface layer defined above, (7) the alloy comprises Ni as a constituent element and contains, in a surface layer covering from the alloy surface to a depth of 20 nm, oxygen-combined Ni atoms in a proportion sharply decreased in the depth direction the average of which is not higher than 5 weight % to the total Ni atoms in the surface layer defined above, and (8) the surface hardness of the alloy is at least 600 kg/mm² in terms of Vickers hardness.

Further, there are described a process of producing the aforesaid hydrogen storage alloy, a negative electrode using the hydrogen storage alloy defined above and an alkaline rechargeable battery using such a negative electrode.

## Description

### FIELD OF THE INVENTION

The present invention related to a hydrogen storage alloy, particularly to a hydrogen storage alloy suitable for an electrode used in an alkaline rechargeable battery, and to a production method thereof, and further to a negative electrode and an alkaline rechargeable battery wherein the aforesaid alloy is used.

### BACKGROUND OF THE INVENTION

Since the alloys capable of storing and releasing hydrogen (which are abbreviated as "hydrogen storage alloys" hereinafter) were discovered, the application thereof have been actively attempted. In particular, the metal-hydride alkaline secondary batteries using hydrogen-storage rare earth alloys as active material have had a growing demand for miniature portable electronic appliances having great capacity.

Those hydrogen-storage rare earth alloys have the basic composition of LaNi₅, and they have undergone improvements in characteristics for the purpose of practical use, e.g., so as to have an enhanced charge-and-discharge capacity and an increased number of charge and discharge cycles (a lengthened life) under practical conditions. specifically, multi-component alloys have been developed by replacing a part of La by one or more of a light rare earth element, such as Co, Pr or Nd, and further a part of Ni by one or more of a metal element such as Co, Mn, Al, Cu or Fe.

However, the batteries using those multi-component alloys as active material for the negative electrode have low discharge capacity in a low temperature range (-20°C - 0°C). This temperature range is included in the environmental conditions to be met by the batteries used as electric source of portable electronic appliances. Therefore, a great improvement in the discharge capacity of an active material for negative electrode under low temperatures has been desired.

Hitherto, a rare earth element-containing hydrogen storage alloy powder has been produced by mixing many metal elemants to constitute the alloy (e.g., La, Ce, Pr, Nd, Co, Ni, Mn, Al, etc.) in individually desired amounts, melting the mixture in a high frequency induction furnace, forming the molten matter into an ingot, subjecting the ingot to an annealing treatment, and then grinding the annealed ingot into a powder.

However, it is inevitable that the ingot obtained through the high-frequency induced heating is contaminated with impurities, so that the hydrogen storage alloy powder produced in the aforementioned conventional manner is not satisfactory with respect to characteristics required for the electrode use thereof. Accordingly, it has also been desired to make an improvement in this point.

Under such a situation, Japanese Tokkai Hei 6-29007 (The term "Tokkai" as used herein means an "unexamined published patent application") proposed the method of using a plasma arc discharge technique in place of the foregoing high frequency induced heating to effectively prevent an ingot from being contaminated with impurities. Although this method is successful in effecting improvements upon some of electrode characteristics, the improvement brought about thereby in a low-temperature characteristic is still insufficient.

### SUMMARY OF THE INVENTION

Thus, the present inventors have studied deeply into hydrogen storage alloys suitable for the negative electrode of an alkaline rechargeable battery from the viewpoint of minimizing the content of impurities therein. As a result thereof, it has been found that, when hydrogen-storage rare earth alloys are produced using a plasma melting technique under a specified condition, the alloys produced can be markedly reduced in content of impurities to provide an electrode having excellent characteristics, including a satisfactory low-temperature characteristic in the use for battery electrode, thereby achieving the present invention.

Therefore, a first object of the present invention is to provide a rare earth element-containing hydrogen storage alloy wherein the content of impurities, such as Mg, Cl and Pb, is markedly decreased.

A second object of the present invention is to provide a method of producing a rare earth element-containing hydrogen storage alloy suitable for a negative electrode used in an alkaline rechargeable battery which ensures an effective decrease in the content of impurities and/or high hardness in the alloy produced.

A third object of the present invention is to provide a negative electrode for use in alkaline rechargeable batteries which has high initial activity and ensures a high-efficiency discharge characteristic and an excellent low-temperature characteristic in the batteries.

A fourth object of the present invention is to provide an alkaline rechargeable battery having a high-efficiency discharge characteristic, an excellent initial charge-and-discharge characteristic and a satisfactory low-temperature characteristic.

The above-described objects of the present invention are attained with a rare earth element-containing hydrogen storage alloy which fulfills at least one requirement selected from the following requirements (1) to (8), and with a method of producing the aforesaid hydrogen storage alloy:
(1) the total content of nonmetal elements present as impurities in the alloy matrix is not higher than 1,200 ppm by weight,
(2) the total content of alkaline earth metal elements present as impurities in the alloy matrix is not higher than 100 ppm by weight,
(3) the content of Mg present as an impurity in the alloy matrix is not higher than 80 ppm by weight,
(4) the content of Cl present as an impurity in the alloy matrix is not higher than 10 ppm by weight,
(5) the content of Pb present as an impurity in the alloy matrix is not higher than 100 ppm by weight,
(6) the alloy has, in a surface layer covering from the alloy surface to a depth of 20 nm, an oxygen concentration that decreases sharply in the depth direction and is not higher than 10 weight % on the average in the surface layer defined above,
(7) the alloy comprises Ni as a constituent element and contains, in a surface layer covering from the alloy surface to a depth of 20 nm, oxygen-combined Ni atoms in a proportion sharply decreased in the depth direction the average of which is not higher than 5 weight % to the total Ni atoms in the surface layer defined above, and
(8) the surface hardness of the alloy is at least 600 kg/mm² in terms of Vickers hardness.

### BRIEF DESCRIPTION OF THE DRAWINGS

Fig. 1 shows graphically the oxygen-concentration distribution in the depth direction of each of the hydrogen storage alloys produced in Example 1 (solid line) and Comparative Example 1 (dotted line). These data were determined by X-ray photoelectron spectroscopy (XPS).

Fig. 2 shows graphically the oxidized state of Ni in the depth direction of each of the hydrogen storage alloys produced in Example 1 (dotted line) and comparative Example 1. These data were also determined by XPS.

In Fig 3., the c/a ratios of the hydrogen storage alloys produced in Examples 3, 6 and 9 and Comparative Examples 2, 3 and 4 are plotted

### DETAILED DESCRIPTION OF THE INVENTION

From the viewpoint of producing an electrode for use in an alkaline rechargeable battery having satisfactory electrode characteristics, including a low-temperature characteristic, it is desirable for the present rare earth element-containing hydrogen storage alloy that the content of Cl be not higher than 10 ppm. As for the total nonmetal elements as impurities, it is desirable for the content thereof to be not higher than 1,200 ppm, particularly not higher than 1,000 ppm. Additionally, the nonmetal elements which become a problem in the present invention are nonmetal elements with which the present alloy is contaminated due to the presence in the starting materials used and in the course of the production thereof, which are comprised mainly of C, O, S, N, B, F and Cl. In particular, it is advantageous to the present alloy that the sulfur content be not higher than 10 ppm, the oxygen content be not higher than 400 ppm, the carbon content be not higher than 500 ppm, the nitrogen content be not higher than 50 ppm, the boron content be not higher than 10 ppm and the fluorine content be not higher than 10 ppm.

Other impurities, including alkaline earth metals, alkali metals and lead, which originate mainly from the contaminants in starting materials used are reduced to a considerable extent by adopting a plasma melting method described hereinafter. More specifically, the hydrogen storage alloy produced in accordance with the present invention is characterized in that the content of Mg can be reduced to 80 ppm or below. From the viewpoint of using the present hydrogen storage alloy as negative electrode of an alkaline rechargeable battery, it is favorable to reduce the content of total alkaline earth metals to 100 ppm or below, or to reduce the alkali metal content to 10 ppm or below, or to reduce the Pb content to 100 ppm or below.

Preferably, the present rare earth element-containing hydrogen storage alloy has a ccmposition represented by the formula Mm(NiCOM)ₓ. Herein, Mm represents one rare earth element selected from the group consisting of Ce, La, Pr and Nd or a mixture of these rare earth elements (a Misch metal), M represents at least one element selected from the group consisting of Mn, Al, Cu and Fe, and x is within the range of 4.0 to 6.0, preferably 4.5 to 5.5. When the alloy having x outside the aforesaid limits is used for the negative electrode of an alkaline rechargeable battery, the resultant battery suffers deterioration in capacity or/and cycle life.

In accordance with the present invention, it is easy to produce a hydrogen storage alloy powder which has an oxygen concentration chewing a sharp decrease from the alloy surface towards the inner part in the surface layer covering from the surface to a depth of 20 nm and having a value of no higher than 10 weight % on average in the surface layer defined above.

Now, the production process for a hydrogen storage alloy according to the present invention is illustrated below.

In the present process, at least a part of starting materials for the formation or a rare earth element-containing hydrogen storage alloy of multi-component type is molten with a plasma melting method. In other words, it is permissible to melt all the starting materials or a part of starting materials, e.g., only the starting materials for Mm, with a plasma melting method.

In a case where only a part of the starting materials is molten with a plasma melting method, it is necessary to add the rest of the starting materials to the molten matter and to melt the resultant matter with a conventional high-frequency induced melting method.

In another case where the plasma melting method is employed for melting all the starting materials, a part or all of the starting materials may be molten in advance with a conventional high-frequency induced melting method, or all the starting materials which have been molten with the plasma melting method may further be molten with a conventional high-frequency induced melting method.

The characteristics of the present alloy can be further improved by repeating the plasma melting method two or more times.

With respect to the plasma melting method employed in the present invention, it is desirable that the plasma be generated in an atmosphere of argon, helium or a mixture thereof. In particular, the plasma generation in an atmosphere of helium is preferred.

The plasma temperature employable in the present production method is higher than, e.g., 10,000 °C. It is desirable to choose a higher plasma temperature, because a melt can be formed in the shorter time and the temperature thereof can be heightened.

Further, it is desirable that the plasma generation be carried out setting the positive electrode on the torch side and the negative electrode on the melt side. Such a setting can be easily attained by using a water-cooled metallic hearth as the hearth to accommodate the melt.

In particular, it is preferable to use a water-cooled hearth made of copper from the viewpoint of preventing the contamination with extra impurities.

In order to produce a homogeneous alloy, it is also desirable that the melt be agitated by the high-frequency magnetic field induced by arranging high-frequency coils around the hearth and sending high-frequency electricity thereto.

In particular, it is advantageous to design the hearth structure so that not only the hearth has a cylindrical crucible-form space provided with segments arranged symmetrically with respect to the vertical axis but also the high-frequency electric current is made to flow so as to surround the hearth. By having such a structure, the high-frequency magnetic field is induced inside the hearth to make it possible to maintain the melt in a floating condition.

In accordance with the aforementioned production method, not only a columnar texture predominates in the rare earth element-containing hydrogen storage alloy, but also the alloy produced has a high density and excellent surface characteristics, including desirable heat of wetting and zeta potential.

Further, the thermal behavior of the present rare earth element-containing hydrogen storage alloy is characteristic upon fusion and solidification in the course of the production according to the present method.

Furthermore, the present hydrogen storage alloy in large in the size of crystal lattice and small in the ratio of the lattice constant of c-axis to that of a-axis (c/a ratio), compared with conventional ones.

The alloy produced in accordance with the present invention has the aforementioned various characteristics in the massive state, such as an ingot having a polished or chemically treated surface, and can retain those characteristics even after the massive alloy is formed into a powder by undergoing heating and grinding treatments, e.g., in using it for the negative electrode of an alkaline rechargeable battery.

The present negative electrode for an alkaline rechargeable battery can be easily obtained as follow: A powder prepared by properly annealing and grinding the massive alloy (such as ingot) produced in the present process as mentioned above is kneaded together with a small amount of binder to be made into a paste, and the paste is coated on a conductive support and then dried, or the paste is formed into a sheet and then applied to a conductive support under pressure.

By using the thus prepared electrode as a negative electrode in a conventional manner, the present alkaline rechargeable battery can be made with ease.

More specifically, the method of producing a hydrogen storage alloy according to the present invention comprises placing at least a part of starting materials in a metallic water-cooled hearth and melting it with plasma generated by setting the torch side as the positive electrode and the alloy side as the negative electrode in an atmosphere of helium, and further melting all the starting materials using a proper melting method optionally combined with a high-frequency melting method.

The thus produced hydrogen storage alloy has reduced contents of impurities including alkaline earth elements, so that the alkaline rechargeable battery using the present alloy as negative electrode can be superior to conventional ones in various characteristics, including low-temperature, cycle life and high-efficianoy discharge characteristics.

The present invention will now be illustrated in greater detail by reference to the following examples. However, the invention should not be construed as being limited to these examples.

### EXAMPLE 1

The alloy represented by Mm(Ni, Co, Mn, Al)ₓ was produced using a conventional high-frequency induced melting method. Therein, x was 5.0.

Then, helium gas was admitted into the plasma generating apparatus equipped with a water-cooled copper hearth as the positive electrode and a plasma torch as the negative electrode so as to adjust the inner pressure to 800 Torr.

The foregoing alloy was continuously fed into the water-cooled copper hearth from the feeder attached to the plasma generating apparatus, and the fed alloy was molten by exposure to the plasma flow.

The liquid of plasma-molten alloy was made to overflow the water-cooled copper hearth, and poured into a cylindrical copper mold to be solidified. Thus, a hydrogen storage alloy was obtained.

The hydrogen storage alloy ingot thus obtained was ground mechanically into a powder, and sifted through a 75 µm mesh screen. The impurities in the thus screened powder smaller than 75 µm in size were examined by glow discharge mass spectrometry. The measurement results are shown in Table 1.

**Table 1**

| | Content (ppm) | |
|---|---|---|
| Impurity | Example 1 | Compar. Ex.1 |
| S | 5 | 36 |
| O | 340 | 460 |
| C | 330 | 650 |
| N | 17 | 73 |
| B | 7.8 | 31 |
| F | 0.9 | 15 |
| Cl | 4.3 | 17 |
| Alkaline metal elements (Li,Na,K,Rb,Cs) | 6 | 17 |
| Alkaline earth metal elements (Be, Mg, Ca, Se, Ba) | 23 | 292 |
| Mg | 12 | 280 |
| Pb | 62 | 190 |

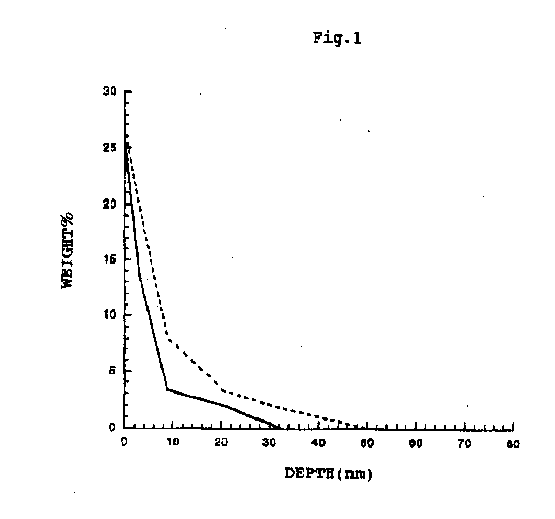

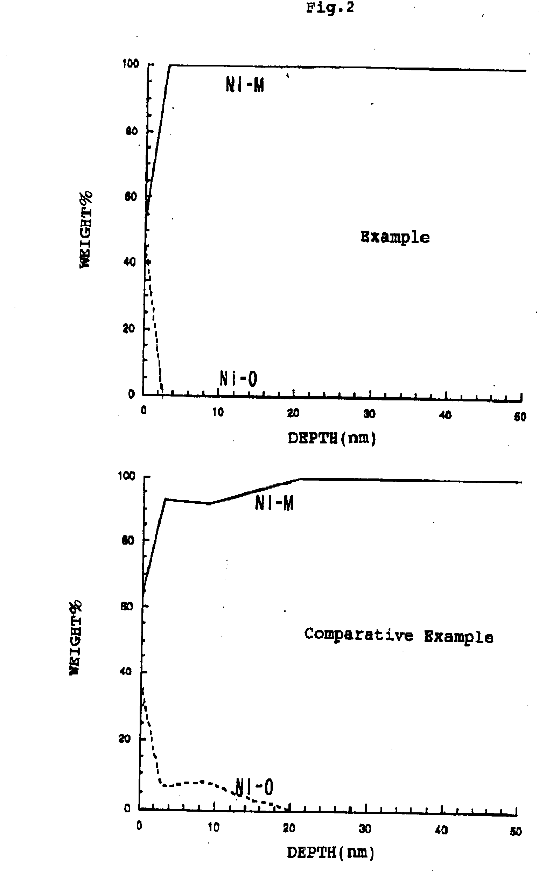

Further, the Vickers hardness of the alloy was found to be 630 kg/mm², and it was confirmed by the XPS measurement of the oxygen distribution in the depth direction of the alloy (Fig. 1) that the oxygen concentration showed a sharp decrease from the alloy surface towards the inner part in the surface layer covering from the surface to a depth of 20 mn. In this surface layer, the average oxygen concentration was below 6.9 weight %. Further, as shown in Fig. 2, it was also confirmed that the oxygen-combined Ni atom decreased drastically in number from the alloy surface towards the inner part. In addition, the proportion of the oxygen-combined Ni atoms to the total Ni atoms was 2.9 weight % on the average in the surface layer covering from the surface to a depth of 20 nm.

### COMPARATIVE EXAMPLE 1

The Mm(Ni, Co, Mn, Al)ₓ (x=5.0) alloy produced by the same high-frequency induced melting method as in Example 1 was placed in an alumina crucible, and molten again in the argon atmosphere of 300 Torr by the high-frequency induced melting method. The melt obtained was poured into a water-cooled iron mold (of a tabular form), and solidified by cooling.

The impurities of the thus obtained alloy were analyzed by the same method as employed in Example 1. The results of the analysis are also shown in Table 1. Further, as the results of the examinations of the other characteristics, which were carried out in the same procedures as in Example 1, it was found that the alloy had Vickers hardness of 577 kg/mm² and the average oxygen concentration of no higher than 11 weight % in the surface layer covering from the surface to a depth of 20 nm (Fig. 1), and further that the alloy showed a rapid decrease in oxygen-combined Ni atom concentration in the neighborhood of the alloy surface (Fig. 2) and the proportion of the oxygen-combined Ni atoms to the total Ni atoms was 6.7 weight % on the average in the surface layer covering from the surface to a depth of 20 nm.

The data set forth in Table 1 indicate that the impurities, including nonmetal elements, in the present hydrogen storage alloy were less than those in the conventional one. Further, the examination results in Example 1 and Comparative Example 1 have proved that the present alloy was high in the surface hardness and low in the oxygen content, compared with the conventional alloy.

### EXAMPLE 2

The hydrogen storage alloy powder obtained in Example 1 (size: 75 µm or below) in an amount of 1.0 g was mixed with 0.25 g of a 3 weight % polyvinyl alcohol solution to prepare a paste. This paste was filled into a sheet of fibrous Ni, and dried to form into a negative electrode.

Then, a positive electrode made of sintered Ni was arranged on each side of the thus formed negative electrode via a nonwoven fabric of polypropylene, and placed in a 30 % water solution of KOH, thereby making an open alkaline rechargeable battery.

Similarly to the above, a comparative alkaline rechargeable battery was made using the hydrogen storage alloy obtained in Comparative Example 1.

Each of the thus made batteries was charged for 5 hours by sending thereto an electric current of 90 mA/g, and allowed to stand for 30 minutes as it was, and further made to discharge an electric current of 60 mA/g until the battery voltage was dropped to 0.8 V. This charge-discharge cycle operation was repeated at 20°C, thereby obtaining the results shown in Table 2.

**Table 2**

| | Discharge Capacity (mAh/g) | |
|---|---|---|
| Number of cycles | Example 1 | Compar. Ex.1 |
| 1 | 270 | 192 |
| 2 | 277 | 201 |
| 3 | 282 | 212 |
| 4 | 287 | 225 |
| 5 | 291 | 234 |
| 6 | 294 | 245 |
| 7 | 297 | 257 |
| 8 | 299 | 266 |
| 9 | 301 | 278 |
| 10 | 303 | 289 |

Further, the discharge capacities of each battery were measured at 20°C and -10°C, respectively, changing the discharge current to 300 mA/g from 60 mA/g. The results obtained are shown in Table 3.

**Table 3**

| | Example 1 | Compar.Ex.1 |
|---|---|---|
| A:Discharge Capacity at 20°C | 297 mAh/g | 295 mAh/g |
| B:Discharge Capacity at -10°C | 211 mAh/g | 136 mAh/g |
| B/A | 71% | 46% |

Furthermore, each battery was examined for high-efficiency discharge characteristic by measuring discharge capacities at 20°C under the conditions that the discharge currents of 900 mA/g and 60 mA/g were made to flow, respectively. The results obtained are shown in Table 4. The letter "C" in Table 4 (and also in Tables 8, 12, 16 and 19 shown below) signifies the hour rate defined according to JIS C-8705. In determining the hour rate, the rated capacity was taken as 300 mAh/g in the present invention. Accordingly, the expression "the discharge condition of 0.2C" means a condition such that it takes 5 hours to complete the discharge, and the expression "the discharge condition of 3C" means a condition such that it takes 20 minutes to complete the discharge.

**Table 4**

| Discharge Condition | Example 1 | Compar.Ex.1 |
|---|---|---|
| a: 0.2C | 295 mAh/g | 293 mAh/g |
| b: 3.0C | 234 mAh/g | 185 mAh/g |
| b/a | 79% | 63% |

### EXAMPLES 3 TO 5 AND COMPARATIVE EXAMPLE 2

Hydrogen storage alloy powders were produced in the same process as in Example 1, except that the alloys used as starting material were different in contents of impurities from that used in Example 1 as shown in Table 5; while a hydrogen storage alloy powder for comparison was produced in the same process as in Comparative Example 1, except that the alloy used as starting material was the same as used in Example 3. The Mg contents, the total alkaline earth metal contents and the Vickers hardness values of the thus produced powders are shown in Table 5.

**Table 5**

| | Alkaline earth metal (ppm) | Mg (ppm) | Vickers hardness |
|---|---|---|---|
| Example 3 | 96 | 87 | 796 |
| | (130) | (120) | |
| Example 4 | 70 | 59 | 858 |
| | (127) | (98) | |
| Example 5 | 107 | 77 | 786 |
| | (150) | (122) | |
| Compar.Ex.2 | 121 | 110 | 588 |
| | (130) | (120) | |

Figures in parentheses are contents of impurities present in the alloy used as starting material in each Example.

The thus produced hydrogen storage alloy powders were each evaluated by the same method as adopted in Example 2. The results obtained are shown in Tables 6 to 8.

**Table 6**

| | Discharge Capacity (mAh/g) | | | |
|---|---|---|---|---|
| Number of cycles | Example 3 | Example 4 | Example 5 | Compar.Ex.2 |
| 1 | 184 | 227 | 230 | 161 |
| 2 | 229 | 252 | 250 | 201 |
| 3 | 251 | 266 | 263 | 238 |

**Table 7**

| | Discharge Capacity (mAh/g) | | | |
|---|---|---|---|---|
| | Example 3 | Example 4 | Example 5 | Compar.Ex. 2 |
| A:Discharge Capacity at 20°C | 282 | 300 | 300 | 291 |
| B:Discharge Capacity at -10°C | 194 | 233 | 224 | 141 |
| B/A | 69% | 78% | 75% | 48% |

**Table 8**

| Discharge Condition | Discharge Capacity (mAh/g) | | | |
|---|---|---|---|---|
| | Example 3 | Example 4 | Example 5 | Compar. Ex. 2 |
| a: 0.2C | 293 | 303 | 309 | 297 |
| b: 3.0C | 233 | 268 | 260 | 183 |
| b/a | 80% | 88% | 84% | 62% |

The data set forth above demonstrate that the hydrogen storage alloys containing Mg as an impurity in a content of no higher than 80 ppm are superior in initial activity, low-temperature characteristic and high-efficiency discharge characteristic. In addition, it is confirmed by the comparison between Example 3 and Example 5 that the reduction to 80 ppm or below in the content of Mg has greater contribution to improvement in characteristics of a hydrogen storage alloy than the reduction to 100 ppm or below in the content of total alkaline earth metals. Further, it is, affirmed by the data in Table 5 that the alloys show a tendency to have higher hardness the lower they are in content of the total alkaline earth metals, and in content of Mg as well.

### EXAMPLES 6 TO 8 AND COMPARATIVE EXAMPLE 3

Hydrogen storage alloy powders were produced in the same process as in Example 1, except that the alloys used as starting material were different in contents of impurities from that used in Example 1 as shown in Table 9; while a hydrogen storage alloy powder for comparison was produced in the same process as in Comparative Example 1, except that the alloy used as starting material was the same as used in Example 7. The total nonmetal element contents, the total alkaline earth metal contents and the Vickers hardness values of the thus produced powders are shown in Table 9.

**Table 9**

| | Nonmetal element (ppm) | Mg (ppm) | Vickers hardness |
|---|---|---|---|
| Example 6 | 1083 | 170 | 781 |
| | (1300) | (220) | |
| Example 7 | 1093 | 54 | 859 |
| | (1320) | (120) | |
| Example 8 | 1270 | 53 | 855 |
| | (1500) | (110) | |
| Compar. Ex. 3 | 1220 | 114 | 594 |
| | (1320) | (120) | |

Figures in parentheses are contents of impurities present in the alloy used as starting material in each Example.

The thus produced hydrogen storage alloy powders were each evaluated by the same method as adopted in Example 2. The results obtained are shown in Tables 10 to 12.

**Table 10**

| Number of cycles | Discharge Capacity (mAh/g) | | | |
|---|---|---|---|---|
| | Example 6 | Example 7 | Example 8 | Compar.Ex.3 |
| 1 | 212 | 236 | 210 | 175 |
| 2 | 233 | 253 | 237 | 209 |
| 3 | 253 | 270 | 259 | 233 |

**Table 11**

| | Discharge Capacity (mAh/g) | | | |
|---|---|---|---|---|
| | Example 6 | Example 7 | Example 8 | Compar.Ex.3 |
| A:Discharge Capacity at 20°C | 290 | 290 | 303 | 288 |
| B:Discharge Capacity at -10°C | 205 | 206 | 226 | 142 |
| B/A | 71% | 71% | 75% | 49% |

**Table 12**

| Discharge Condition | Discharge Capacity (mAh/g) | | | |
|---|---|---|---|---|
| | Example 6 | Example 7 | Example 8 | Compar.Ex.3 |
| a: 0.2C | 305 | 308 | 314 | 295 |
| b: 3.0C | 228 | 248 | 261 | 203 |
| b/a | 75% | 80% | 83% | 69% |

The data set forth above demonstrate that reducing the total content of alkaline earth metals present as impurities in the hydrogen storage alloy to 100 ppm or below is important for the achievement of high initial activity, satisfactory low-temperature characteristic and excellent high-efficiency discharge characteristic. Further, it is confirmed by the above data that the initial activity, the low-temperature characteristic and the high-efficiency discharge characteristic of hydrogen storage alloys are improved by reducing the total content of nonmetal elements as impurities to 1,200 ppm or below even when the total content of alkaline earth elements as impurities is above 100 ppm. Furthermore, the above data prove that tho hardness of alloys can be considerably heightened when the total content of alkaline earth metals is reduced to 100 ppm or below, and further that the reduction in the total content of nonmetal elements is also effective in heightening the hardness of alloys.

### EXAMPLES 9 TO 11 AND COMPARATIVE EXAMPLE 4

Bydrogen storage alloy powders were produced in the same process as in Example 1, except that the alloys used as starting material were different in contents of impurities from that used in Example 1 as shown in Table 13; while a hydrogen storage alloy powder for comparison was produced in the same process as in Comparative Example 1, except that the alloy ured as starting material was the same as used in Example 9. The total nonmetal element contents, the total alkaline earth metal contents and the Vickers hardness values of the thus produced powders are shown in Table 13.

**Table 13**

| | Alkaline earth metal | Pb | Vickers hardness |
|---|---|---|---|
| | (ppm) | (ppm) | |
| Example 9 | 54 | 104 | 859 |
| | (127) | (129) | |
| Example 10 | 33 | 67 | 895 |
| | (65) | (114) | |
| Example 11 | 170 | 89 | 796 |
| | (210) | (118) | |
| Compar.Ex.4 | 110 | 120 | 595 |
| | (127) | (129) | |

Figures in parentheses are contents of impurities present in the alloy used an starting material in each Example.

The thus produced hydrogen storage alloy powders were each evaluated by the same method as adopted in Example 2. The results obtained are shown in Tables 14 to 16.

**Table 14**

| Number of cycles | Discharge Capacity (mAh/g) | | | |
|---|---|---|---|---|
| | Example 9 | Example 10 | Example 11 | Compar.Ex.4 |
| 1 | 217 | 230 | 204 | 172 |
| 2 | 250 | 254 | 234 | 200 |
| 3 | 262 | 266 | 258 | 228 |

**Table 15**

| | Discharge Capacity (mAh/g) | | | |
|---|---|---|---|---|
| | Example 9 | Example 10 | Example 11 | Compar.Ex.4 |
| A:Discharge Capacity at 20°C | 291 | 300 | 276 | 301 |
| B:Discharge Capacity at -10°C | 221 | 224 | 185 | 149 |
| B/A | 76% | 75% | 67% | 49% |

**Table 16**

| Discharge Condition | Discharge Capacity (mAh/g) | | | |
|---|---|---|---|---|
| | Example 9 | Example 10 | Example 11 | Compar.Ex.4 |
| a: 0.2C | 309 | 309 | 304 | 299 |
| b: 3.0C | 251 | 260 | 234 | 182 |
| b/a | 81% | 84% | 77% | 61% |

The data set forth above demonstrate that reducing the total content of alkaline earth metals present as impurities in the hydrogen storage alloy to 100 ppm or below is important for the achievement of high initial activity, satisfactory low-temperature characteristic and excellent high-efficiency discharge characteristic. Further, it is confirmed by the above data that the initial activity, the low-temperature characteristic and the high-efficiency discharge characteristic of hydrogen storage alloys are improved by reducing the content of Pb as an impurity to 100 ppm or below even when the total content of alkaline earth elements as impurities is above 100 ppm. Furthermore, the above data prove that the hardness of alloys can be considerably heightened when the total content of alkaline earth metals is reduced to 100 ppm or below, and further that the reduction in the content of Pb is also effective in heightening the hardness of alloys.

### EXAMPLE 12

Hydrogen storage alloy powders were produced in the same processes as in Example 1 and Comparative Example 1, respectively, except that the alloy used as starting material was different from that used in those Examples. The alloy power produced in accordance with the process of Example 1 had a chlorine content of 4.7 ppm, while the alloy powder produced in accordance with the process of Comparative Example 1 had a chlorine content of 11.0 ppm. These alloy powders each were evaluated by the same method as adopted in Example 2. The results obtained are shown in Tables 17 to 19.

**Table 17**

| | Content of Cl as impurity | |
|---|---|---|
| Number of cycles | 4.7 ppm | 11.0 ppm |
| 1 | 174 | 172 |
| 2 | 230 | 210 |
| 3 | 260 | 249 |

**Table 18**

| | Content of Cl as impurity | |
|---|---|---|
| | 4.7 ppm | 11.0 ppm |
| A:Discharge Capacity at 20°C | 278 | 278 |
| B:Discharge Capacity at -10°C | 184 | 133 |
| B/A | 66% | 48% |

**Table 19**

| Discharge Condition | Content of Cl as impurity | |
|---|---|---|
| | 4.7 ppm | 11.0 ppm |
| a: 0.2C | 288 | 288 |
| b: 3.0C | 228 | 196 |
| b/a | 79% | 68% |

As can be seen from the above results, the chlorine as an impurity had markedly different influences upon properties of a hydrogen storage alloy according as its content was below or above 10 ppm.

### EXAMPLE 13

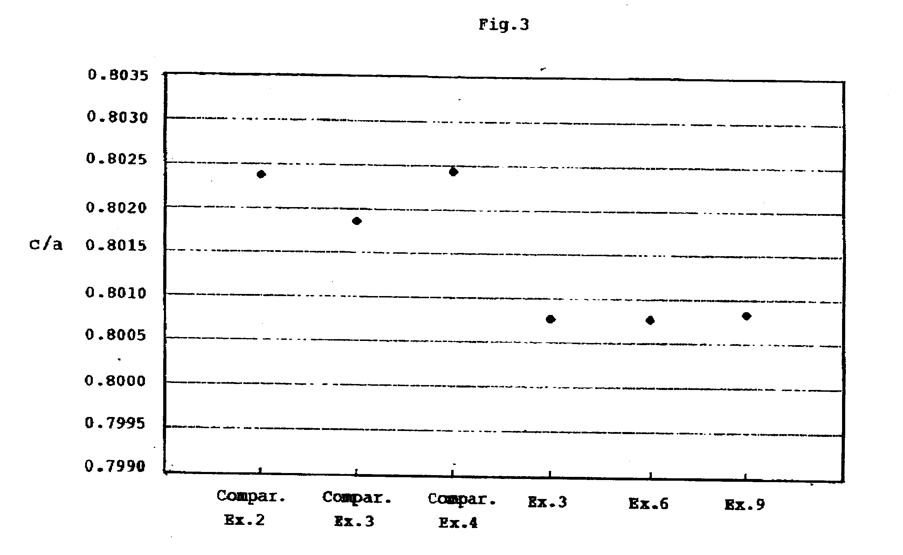

The hydrogen storage alloys produced in Examples 3, 6 and 9 and Comparative Examples 2, 3 and 4 were each examined for lattice constants, and the c/a values thereof were plotted in Fig. 3.

The results shown in Fig. 3 confirms that the hydrogen storage alloys according to the present invention had smaller c/a ratios than conventional ones.

## Claims

1. A rare earth element-containing hydrogen storage alloy, wherein at least Mg, Cl or Pb element is present as one of impurities in said alloy matrix in a content of no higher than 80 ppm, no higher than 10 ppm or no higher than 100 ppm, respectively, by weight.

2. A rare earth element-containing hydrogen storage alloy according to claim 1, wherein alkali metal elements are present as impurities in said alloy matrix in a total content of no higher than 10 ppm by weight.

3. A rare earth element-containing hydrogen storage alloy according to claim 1 or 2, wherein alkaline earth metal elements, including Mg, are present as impurities in said alloy matrix in a total content of no higher than 100 ppm by weight.

4. A rare earth element-containing hydrogen storage alloy, wherein at least nonmetal elements or alkaline earth metal elements are present as impurities in said alloy matrix in a total content of no higher than 1,200 ppm or no higher than 100 ppm, respectively, by weight.

5. A rare earth element-containing hydrogen storage alloy according to claim 1 or 4, wherein a sulfur element is present as one of impurities in said alloy matrix in a content of no higher than 10 ppm by weight.

6. A rare earth element-containing hydrogen storage alloy according to claim 1 or 4, wherein an oxygen element is present as one of impurities in said alloy matrix in a content of no higher than 400 ppm by weight.

7. A rare earth element-containing hydrogen storage alloy according to claim 1 or 4, wherein a carbon element is present as one of impurities in said alloy matrix in a content of no higher than 500 ppm by weight.

8. A rare earth element-containing hydrogen storage alloy according to claim 1 or 4, wherein a nitrogen element is present as one of impurities in said alloy matrix in a content of no higher than 50 ppm by weight.

9. A rare earth element-containing hydrogen storage alloy according to claim 1 or 4, wherein a boron element is present as one of impurities in said alloy matrix in a content of no higher than 10 ppm by weight.

10. A rare earth element-containing hydrogen storage alloy according to claim 1 or 4, wherein a fluorine element is present as one of impurities in said alloy matrix in a content of no higher than 10 ppm by weight.

11. A rare earth element-containing hydrogen storage alloy, said alloy having an oxygen concentration which shows a sharp decrease from the alloy surface towards the inner part in a surface layer covering from the surface to a depth of 20 nm and has a value of no higher than 10 weight % on average in said surface layer.

12. A rare earth element-containing hydrogen storage alloy, said alloy having a surface hardness of at least 600 kg/mm² in terms of Vickers hardness.

13. A rare earth element-containing hydrogen storage alloy, said alloy comprising a Ni element and showing a rapid decrease in oxygen-combined Ni atom concentration in a surface layer covering from the alloy surface to a depth of 20 nm, wherein the proportion of the oxygen-combined Ni atoms to the total Ni atoms is not greater than 5 weight % on the average in said surface layer.

14. A rare earth element-containing hydrogen storage alloy according to claim 1, 4, 11, 12 or 13, which has a composition represented by formula Mm(NiCoM)ₓ wherein Mm is at least one rare earth element selected from the group consisting of Ce, La, Pr and Nd, M is at least one element selected from the group consisting of Mn, Al, Cu Fe and Ti and x is within the range of 4.0 to 6.0.

15. A process of producing a rare earth element-containing hydrogen storage alloy having a composition represented by formula Mm(NiCoM)ₓ wherein Mm is at least one rare earth element selected from the group consisting of Ce, La, Pr and Nd, M is at least one element selected from the group consisting of Mn, Al, Cu, Fe and Ti and x is within the range of 4.0 to 6.0, which comprises a step of melting at least a part of starting materials by the use of a plasma melting method and reduces a content of at least Mg, Cl or Pb element present as one of impurities in said alloy matrix to no higher than 80 ppm, no higher than 10 ppm or no higher than 100 ppm, respectively, by weight.

16. A process of producing a rare earth element-containing hydrogen storage alloy according to claim 15, wherein at least one of the starting materials molten by the use of a plasma melting method is a Misch metal.

17. A process of producing a rare earth element-containing hydrogen storage alloy according to claim 15, wherein all the starting materials are molten by the use of a plasma melting method.

18. A process of producing a rare earth element-containing hydrogen storage alloy according to claim 15, which comprises a step of melting all the starting materials by the use of a high-frequency induced melting method prior to said melting step using a plasma melting method.

19. A process of producing a rare earth element-containing hydrogen storage alloy according to claim 15, which comprises a melting step using a high-frequency induced melting method after said melting step using a plasma melting method.

20. A method of producing a rare earth element-containing hydrogen storage alloy according to claim 15, wherein the plasma melting method in carried out in an atmosphere of inert gas.

21. A method of producing a rare earth element-containing hydrogen storage alloy according to claim 20, wherein the inert gas is argon or helium.

22. A method of producing a rare earth element-containing hydrogen storage alloy according to claim 15, wherein the plasma melting method is performed using a water-cooled metallic hearth for accommodating a melt.

23. A method of producing a rare earth element-containing hydrogen storage alloy according to claim 22, wherein the melt accommodated in the water-cooled metallic hearth is agitated by the high-frequency magnetic field induced by arranging high-frequency coils around said hearth and sending high-frequency electricity thereto.

24. A method of producing a rare earth element-containing hydrogen storage alloy according to claim 23, wherein the water-cooled metallic hearth has a cylindrical crucible-form space provided with segments arranged symmetrically with respect to the vertical axis and holds the melt in a floating condition with a high-frequency magnetic field induced inside thereof by flowing a high-frequency electric current so as to surround the hearth.

25. A method of producing a rare earth element-containing hydrogen storage alloy according to claim 15, wherein the plasma melting method is carried out by setting a positive electrode on the torch side and a negative electrode on the melt side to generate plasma.

26. A negative electrode for an alkaline rechargeable battery, which has on a conductive support a hydrogen storage alloy according to claim 1, 4, 11, 12 or 13.

27. A negative electrode according to claim 26, which provides the alkaline rechargeable battery having a discharge capacity of at least 250 mAh/g in at least the third charge-discharge cycle carried out at 20°C.

28. A negative electrode according to claim 26, which provides the alkaline rechargeable battery wherein the discharge capacity in the discharge operation carried out at 20°C under the high efficienty discharge condition of 3C is not lower than 70 % of the discharge capacity in the discharge operation carried out at 20°C under the discharge condition of 0.2C.

29. A negative electrode according to claim 26, which provides the alkaline rechargeable battery wherein the discharge capacity at -10°C is not lower than 50 % of the discharge capacity at 20°C.

30. An alkaline rechargeable battery having a negative electrode according to claim 26.
